Europäisches Patentamt

(19) European Patent Office                    (11) Publication number:      **0 164 985**

Office européen des brevets                                          **B1**

(12)                    **EUROPEAN PATENT SPECIFICATION**

(45) Date of publication of patent specification: **16.08.89**      (51) Int. Cl.⁴: **B 23 D 79/02,** B 29 C 37/04

(21) Application number: **85303906.3**

(22) Date of filing: **03.06.85**

(54) **External bead removing tool.**

(30) Priority: **08.06.84 GB 8414642**

(43) Date of publication of application:
**18.12.85 Bulletin 85/51**

(45) Publication of the grant of the patent:
**16.08.89 Bulletin 89/33**

(84) Designated Contracting States:
**BE DE FR IT NL**

(56) References cited:
**DE-A-2 542 893**
**DE-A-2 622 566**
**DE-A-3 001 453**

(73) Proprietor: **British Gas Corporation**
**Rivermill House 152 Grosvenor Road**
**London SW1V 3JL (GB)**

(72) Inventor: **Dickinson, Alan John**
**23 Westerkirk, Southfield Lea**
**Cramlington, Northumberland (GB)**

Courier Press, Leamington Spa, England.

## Description

This invention relates to a bead stripping device that is to say a device for removing a weld bead from a plastic weld, for example, on plastic pipes used in the gas and water industries.

In the manufacture of large plastic structures, beads form at joints in the plastic structures as a result of butt welding or moulding of the plastic structures. For example beads may be formed circumferentially around the inside and outside of plastic water or gas mains where lengths of pipe are butt welded together.

The removal of the external beads is important and, particularly on larger diameter pipes such as pipes between 250 and 1000 mm in diameter, presents a number of problems. Existing equipment designed to remove beads tends to be designed for a given size of pipe and so cannot be used universally. Furthermore, most equipement of this type is not built in the form of a hand tool and is not readily portable.

A device for stripping a bead from a component of plastics material corresponding to the precharacterizing part of Claim 1 is already known from DE—A—2542893 comprising a body carrying in a fixed position a blade having a leading cutting edge which cuts the bead from the component as the device slides thereon in the working direction lengthwise of the bead thus exposing a newly-cut undersurface on the bead.

That device is driven entirely by impulsive forces developed by an electric or pneumatic hammer. Accordingly, it is applicable only in a workshop where the structure i.e., a window frame can be adequately supported and clamped on a worktable of substantial size.

Devices are also known from DE—A—2622566 and GB—A—2043516A for cutting or chamfering pipes of plastic material or removing proturberances therefrom. Such devices are of the machine tool kind having a heavy base on which the pipe is clamped. The base carries a rotary power-driven head. The blade movably mounted on the head and is forced towards the pipe by cam-and-follower or by a pre-loaded spring.

None of those devices is suitable for use in the field.

By contrast, a device according to the present invention is advanced by reaction forces from the bead which has been cut from the pipe or other structure and is characterised in that the body has a reaction surface which extends rearwardly away from the cutting edge and has a wheel with a toothed periphery which faces said surface and which engages an already-cut bead-portion as it slides over said surface beneath said wheel as the latter is rotated by drive means, so that said device is driven in said working direction by reaction forces imposed on said wheel by said bead-portion.

In the accompanying drawings:—

Figure 1 is an isometric view of a bead stripping device embodying the invention; and

Figure 2 is a section through the bead stripping device.

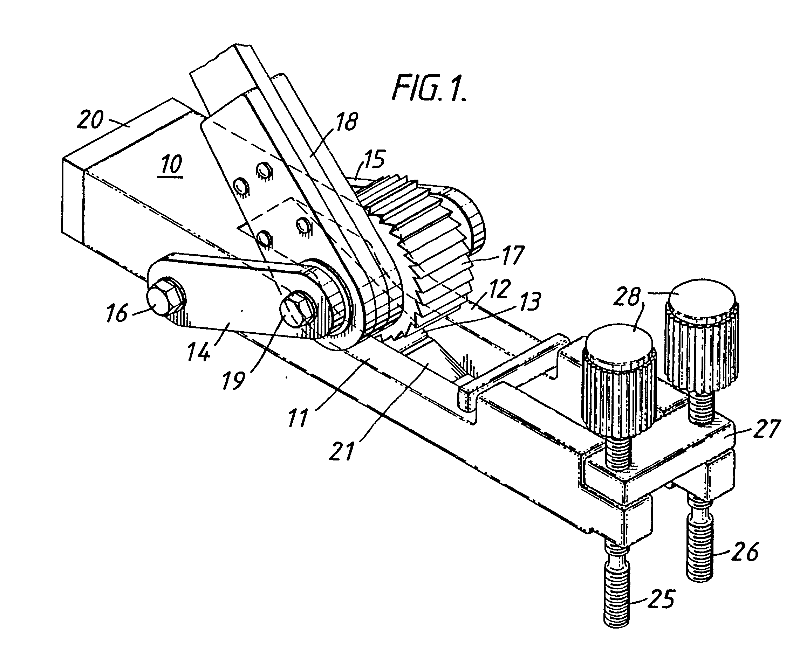

The bead stripping device shown in Figure 1 comprises an elongated metal body 10 divided at 11 and 12 into two portions between which is located an inclined reaction surface 13.

A pair of links 14 and 15 are provided by means of a bolt 16 to the body 10. Between the links 14 and 15 is supported a rotary toothed stripper wheel 17 attached through a ratchet device to a lever 18, the lever, ratchet device and toothed stripper wheel being journaled between the links on a bolt 19.

It will be seen that the toothed stripper wheel is located adjacent the reaction surface 13.

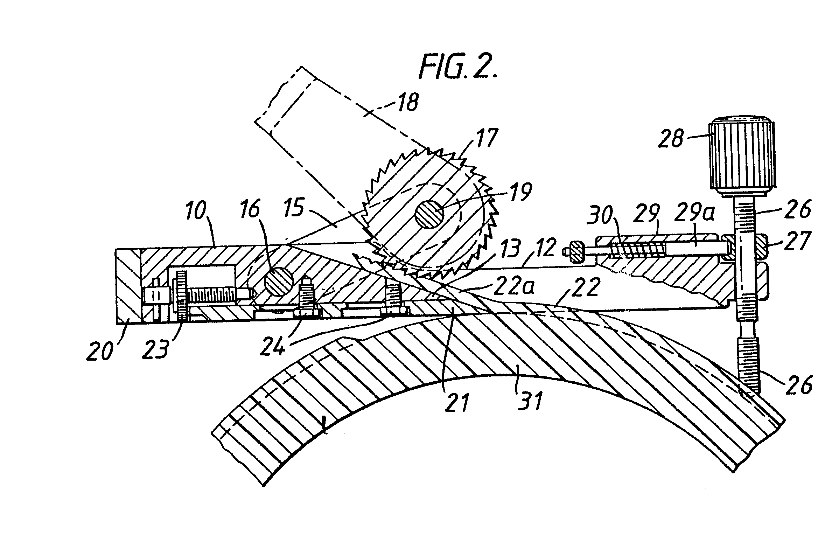

At one end of the body 10 is a block 20 to enable the body to be hammered so that a blade 21 located on the underside of the body 10 may be engaged into a bead 22 on a pipe 31 (see Figure 2).

The blade 21 is adjusted by means of an adjuster nut 23 and may be clamped in its adjusted position by means of bolts 24. The body 10 has stabilising screws 25, 26 which are engaged in threads in a block 27 and have knurled adjusternuts 28.

The stabilising screws are intended to engage the pipe so as to maintain the position of the stripper as it operates.

To facilitate use of the stripper device the stabilising screws have a quick release clamp device 29 comprising a bolt 29a engageable in a hole in the block 27. The stabilising screws and the bolt 27 may be bodily moved upwardly as shown in Figure 2 once the quick release clamp has been retracted against pressure of spring 30. The purpose of this quick release clamp and the rapid retraction it allows of the screws is to enable the setting of the stripper device to be maintained whilst a cut in the bead is started by knocking the tool into the bead using a hammer to hit the block 20 at one end of the device.

Once a portion 22a of the bead is raised as shown in Figure 2 the quick release clamp is reengaged with the stabilising screws and the rotary toothed stripper wheel is engaged with the bead portion 22 to press it against the inclined reaction surface 13. When the lever is moved (clockwise rotation as shown in Figure 2) it will cause the tooth stripper wheel to rotate and the teeth will engage the bead thus pulling the whole device forward so that the blade 21 will engage and cut away a further portion of the bead. Thus in effect the stripper device pulls itself forward round the pipe using the bead as a guide. The ratchet allows continuous operation of the device without removal of the device from the bead. The steady pull on the bead provide a smooth cut eliminating the stick/slip action seen in other designs of bead stripper, since, when in tension between the blade and stripper wheel, the bead acts to react the cutting forces at the wheel-surface nip. The

lever and the toothed wheel provide mechanical advantage.

## Claims

1. A device for stripping a bead (22) from a component (31) of plastics material comprising a body (10) carrying in a fixed position a blade (21) having a leading cutting edge which cuts the head (22) from the component (31) as the device slides thereon in a working direction lengthwise of the bead (22) thus exposing a newly-cut undersurface on the bead (22) characterised in that the body (10) has a reaction surface (13) which extends rearwardly away from said cutting edge and has a wheel (17) with a toothed periphery which faces said surface (13) and which engages an already-cut bead-portion (22a) as it slides over said surface (13) beneath said wheel (17) as the latter is rotated by drive means (18), so that said device is driven in said working direction by reaction forces imposed on said wheel (17) by said bead-portion (22a).

2. A device according to Claim 1 said body (10) having relatively adjustable parts (11, 12; 25, 26) to enable the body to slide on a cylindrical component (31).

3. A device according to Claim 2, said adjustable parts including parts (25, 26) which are retractable to non-operating positins to facilitate driving of said blade (21) initially into said bead (22).

4. A device according to Claim 3, said retractable parts (25, 26) being releasably held in working position by quick-release mechanism (27, 29, 29a, 30).

5. A device according to any preceding claim, said wheel (17) and said reaction surface (13) being effectively interconnected by mechanism which allows the gap between said periphery of said wheel (17) and said reaction surface (13) to vary.

6. A device according to Claim 5 said wheel (17) being mounted on an axle (19) supported by links (14, 15) connected by a pivot (16) to said body (10).

7. A device according to any preceding claim said drive means comprising a handle (18) which is connected to said wheel (17) by ratchet mechanism.

## Patentansprüche

1. Vorrichtung zum Entfernen eines Schweißgrates (22) von einem Teil aus Kunststoff, mit einem Körper (10), der in einer festgelegten Stellung eine Klinge (21) mit einer vorderen Schneidkante aufweist, die den Schweißgrat (22) vom Teil (31) abschneidet, wenn die Vorrichtung in Arbeitsrichtung längsseits des Schweißgrates (22) darauf gleitet, um auf diese Weise eine neu geschnittene Unterfläche auf dem Schweißgrat (22) freizulegen, dadurch gekennzeichnet, daß der Körper (10) eine Reaktionsfläche 13) aufweist, die sich nach hinten von der Schneidkante weg erstreckt, sowie ein Rad (17) mit gezahntem Umfang aufweist, der der Reaktionsfläche (13) zugewandt ist und an einem bereits abgeschnittenen Schweißgrat-Teilstück (22a) angreift, wenn dieses über die Reaktionsfläche (13) unter dem Rad (17) gleitet und letzteres durch eine Antriebseinrichtung (18) gedreht wird, so daß die Vorrichtung in der Arbeitsrichtung durch Reaktionskräfte angetrieben wird, die auf das Rad (17) durch das Schweißgrat-Teilstück (22a) ausgeübt werden.

2. Vorrichtung nach Anspruch 1, gekennzeichnet durch relativ einstellbare Mittel (11, 12; 25, 26), die den Körper auf einem zylindrischen Teil (31) gleiten lassen.

3. Vorrichtung nach Anspruch 2, dadurch gekennzeichnet, daß die einstellbaren Mittel Teile (25, 26) enthalten, die aus den Arbeitsstellungen zurückziehbar sind, um das anfängliche Eintrieben der Klinge in den Schweißgrat (22) zu erliechtern.

4. Vorrichtung nach Anspruch 3, dadurch gekennzeichnet, daß die zurückziehbaren Teil (25, 26) durch einen Schnellösemechanismus (27, 29, 29a, 30) lösbar in Arbeitsstellung gehalten werden.

5. Vorrichtung nach einem der vorangehenden Ansprüche, dadurch gekennzeichnet, daß das Rad (17) und die Reaktionsfläche (13) effektiv durch einen Mechanismus miteinander verbunden sind, der eine Änderung des Spaltes zwischen dem Umfang des Rades (17) und der Reaktionsfläche zuläßt.

6. Vorrichtung nach Anspruch 5, dadurch gekennzeichnet, daß das Rad (17) auf einer durch Gelenklaschen (14, 15) getragenen Achse (19) sitztg, wobei die Gelenklaschen über einen Schwenkbolzen (16) mit dem Körper (10) verbunden sind.

7. Vorrichtung nach einem der vorangehenden Ansprüche, dadurch gekennzeichnet, daß die Antriebseinrichtung einen Handhebel (18) aufweist, der mit dem Rad (17) über einen Ratschenmechanismus verbunden ist.

## Revendications

1. Dispositif pour éliminer un cordon de soudure (22) d'une pièce (31) en matière plastique, comprenant un corps (10) portant en position fixe une lame (21) ayant un bord antérieur de coupe qui élimine de la pièce (31) le cordon de soudure (22) en le coupant lors du glissement du dispositif sue cette pièce dans la direction de travail le long du cordon de soudure (22), mettant ainsi à nu sur le cordon de soudure (22) une surface inférieure nouvellement coupée, caractérisé en ce que le corps (10) possède une surface de réaction (13) qui s'étend vers l'arrière depuis ledit bord de coupe et possède une roue (17) à circonférence dentée qui fait face à ladite surface (13) et qui vient en contact avec une portion déjà coupée de cordon de soudure (22a) lors de son glissement sur ladite surface (13) au-dessous de ladite roue (17) lors de la rotation de cette dernière par un système d'entraînement (18), de sorte que ledit dispositif soit entraîné dans ladite direction de travail par les forces de réaction imposées à ladite roue (17) par ladite portion de cordon de soudure (22a).

2. Dispositif suivant la revendication 1, dont le corps (10) possède des pièces (11, 22; 25, 26) relativement adjustables pour permettre le glissement du corps sur une pièce cylindrique (31).

3. Dispositif suivant la revendication 2, dont les pièces ajustables, comprennent les pièces (25, 26) qui sont rétractables en des positions non fonctionnelles pour faciliter l'entraînement de la lame (21) initialement dans le cordon de soudure (22).

4. Dispositif suivant la revendication 3, dont les pièces rètractables (25, 26) sont maintenues de manière amovible en position de travail par un mécanisme à libération rapide (27, 29, 29a, 30).

5. Dispositif suivant l'une quelconque des revendications précédentes, dont la roue (17) et la surface de réaction (13) sont interconnectés efficacement par un mécanisme qui permet de faire varier l'espace entre la circonférence de la roue (17) et la surface de réaction (13).

6. Dispositif suivant la revendication 5, dont la roue (17) est montée sur une axe (19) supporté par des biellettes de couplage (14, 15) reliées par un pivot (16) au corps (10).

7. Dispositif suivant l'une quelconque des revendications précédentes, dont le système d'entraînement comprend une poignée (18) qui est relié à la roue (17) par un mécanisme à rochet.

FIG.1.

FIG.2.

EP 0 164 985 B1